# EUROPÄISCHE PATENTANMELDUNG

(11) **EP 3 971 846 A1**
(43) Veröffentlichungstag der Anmeldung: **23.03.2022**
(21) Anmeldenummer: 21195284.1
(22) Anmeldetag: 07.09.2021
(51) Int. Cl.: G07C 9/25, G07C 9/27, G06K 19/06

(54) **VERFAHREN ZUM AUTHENTIFIZIEREN MIT EINEM OPTOELEKTRONISCH LESBAREN CODE SOWIE ZUTRITTSKONTROLLEINRICHTUNG UND COMPUTERPROGRAMM HIERZU**

(30) Priorität: 11.09.2020 DE 102020123755
(71) Anmelder: Astra Gesellschaft Für Asset Management MbH&Co. Kg, 30890 Barsinghausen (DE)
(72) Erfinder: Stobbe, Anatoli, 30890 Barsinghausen (DE); Gries, Thomas, 30890 Barsinghausen (DE); Scheffler, Hartmut, 30890 Barsinghausen (DE)
(74) Vertreter: Gramm, Lins & Partner Patent- und Rechtsanwälte PartGmbB

(57) **Zusammenfassung**

Ein Verfahren zum Authentifizieren mit einem optoelektronisch lesbaren Code (5) wird beschrieben. Der optoelektronisch lesbare Code (5) beinhaltet Abbildungsdaten, die mit einer Abbildung eines berechtigten Nutzers (N) oder Objektes verknüpft sind, und einen geheimen, verschlüsselten Sicherheits-Token. Die mit der Abbildung verknüpften Abbildungsdaten bilden zusammen mit dem Sicherheits-Token einen kombinierten verschlüsselten Nutzdatensatz in dem optoelektronisch lesbaren Code (5). Es erfolgt ein Überprüfen der Integrität des Nutzers (N) des optoelektronisch lesbaren Codes (5) durch Entschlüsseln des in dem optoelektronisch lesbaren Code (5) enthaltenen Nutzdatensatzes, ein Auslesen der mit der Abbildung verknüpften Abbildungsdaten aus dem entschlüsselten Nutzdatensatz und ein Vergleichen der mit den ausgelesenen Abbildungsdaten verknüpften Abbildung mit der entsprechenden Erscheinung des die Authentifizierung mit dem optoelektronisch lesbaren Code (5) veranlassenden Nutzers (N) oder Objektes. Weiterhin erfolgt ein Authentifizieren des Nutzers (N) oder Objektes durch Überprüfen des in dem optoelektronisch lesbaren Code (5) enthaltenen Sicherheits-Tokens.

## Beschreibung

Die Erfindung betrifft ein Verfahren zum Authentifizieren mit einem optoelektronisch lesbaren Code.

Die Erfindung betrifft weiterhin eine Zutrittskontrolleinrichtung mit einer zentralen Datenverarbeitungseinheit, einem Computerprogramm zur Ausführung auf einem mobilen Endgerät und mit dezentralen Schließeinheiten.

Die Erfindung betrifft zudem ein Computerprogramm mit Programmcodemitteln zur Durchführung der Schritte des Verfahrens zum Authentifizieren mit einem optoelektronisch lesbaren Code.

Optoelektronisch lesbare Codes werden zum schnellen und einfachen Eingeben statischer Daten in ein Lesegerät genutzt. Sie sind in Form von ein- oder mehrdimensionalen Codes bekannt.

Eine einfache Form solcher optoelektronisch lesbaren Codes sind Barcodes (eindimensionaler Code), bei denen eine Vielzahl senkrechter Striche unterschiedlicher Breite nebeneinander mit Zwischenräumen angeordnet sind. Eine größere Informationsdichte kann mit QR-Codes (Quick Response = schnelle Antwort) realisiert werden. Diese enthalten sowohl horizontal, als auch vertikal Informationen in einem Muster. Informationen lassen sich aber auch mit Hologrammen dreidimensional codieren.

Optoelektronische Codes lassen sich in gestapelte Codes (z.B. Codablock, Code 49 und PDF417), in Matrix-Codes (z.B. QR-Code, DataMatrix-Code, Maxi-Code, Aztec-Code, JAB-Code und Han-Xin-Code), in Punktcodes (z.B. Dot-CodeA, Snowflake-Code oder BeeTagg-Code) sowie Sonderformen (z.B. Composite-Code, RM4SCC-Code und ähnliches) einteilen.

EP 2 898 451 B1 offenbart ein Verfahren und eine Vorrichtung zur Informationsgewinnung mit zweidimensionalen Barcodes. Durch das Hinzufügen eines persönlichen Portraitbildes zu dem 2D-Barcodemuster können personalisierte 2D-Barcodes geschaffen werden, die die Identifizierbarkeit der 2D-Barcodes erhöhen. Solche personalisierten 2D-Barcodes ermöglichen es dem Empfänger der Information, zusätzliche persönliche Informationen zu erhalten. Durch eine Bildtransformation, die auf einem ersten 2D-Barcode durchgeführt wird, wird ein virtueller 2D-Barcode erhalten. Über eine Datenbank kann dann eine Verknüpfung zwischen dem ersten 2D-Barcode und dem virtuellen 2D-Barcode hergestellt werden, um auf diese Weise auch Beziehungen zu weiteren 2D-Barcodes zu dokumentieren.

S. Mahajan, N. Wankhade: Image Embedding in QR Code, in: International Journal of Science and Research (IJSR), Vol. 4, No. 4, April 2015, S. 2077-2080 beschreibt die Einbettung von Bildern in einen QR-Code so, dass die Bilder in dem QR-Code visuell sichtbar sind. Hierzu wird ein maskiertes Bild dem QR-Code überlagert.

D. Rawat, R. Sahu, Y. Puthran: Optimizing the Capacity of QR Code To Store Encrypted Image, in: International Journal of Emerging Trends in Engineering Research (IJETER), Vol. 3, No. 1, Seiten 1-4 (2015) beschreibt das Konvertieren von Pixeldaten eines Bildes in einen komprimierten Datenstrom, der in einer Sequenz von QR-Codes abgespeichert wird.

Ausgehend hiervon ist es Aufgabe der vorliegenden Erfindung, ein verbessertes Verfahren zum Authentifizieren mit einem optoelektronisch lesbaren Code und eine verbesserte Zutrittskontrolleinrichtung und Computerprogramm hierzu zu schaffen.

Die Aufgabe wird mit dem Verfahren mit den Merkmalen des Anspruchs 1, die Zutrittskontrolleinrichtung mit den Merkmalen des Anspruchs 9 und das Computerprogramm mit den Merkmalen des Anspruchs 10 gelöst. Vorteilhafte Ausführungsformen sind in den Unteransprüchen beschrieben.

Zur Authentifizierung mit einem optoelektronisch lesbaren Code (nachfolgend auch kurz als "optischer Code" bezeichnet) wird vorgeschlagen, dass der optische Code eine Kombination aus einem geheimen, verschlüsselten Sicherheits-Token und Abbildungsdaten beinhaltet, welche mit einer Abbildung eines berechtigten Nutzers oder Objektes verknüpft sind. Die mit der Abbildung verknüpften Daten bilden zusammen mit dem Sicherheits-Token einen kombinierten Nutzdatensatz, der in verschlüsselter Form in dem optischen Code hinterlegt ist.

Es erfolgt ein Überprüfen der Integrität des Nutzers des optischen Codes durch Entschlüsseln des in dem optischen Code enthaltenen Nutzdatensatzes, durch Auslesen der mit der Abbildung verknüpften Daten aus dem entschlüsselten Nutzdatensatz und durch Vergleichen der mit den ausgelesenen Daten verknüpften Abbildung mit dem entsprechenden Aussehen des die Authentifizierung mit dem optischen Code veranlassenden Nutzers oder Objektes, d.h. mit der tatsächlichen Erscheinung des Nutzers oder Objektes

Weiterhin erfolgt ein Authentifizieren des Nutzers oder Objektes durch Überprüfen des in dem optischen Code enthaltenen Sicherheits-Tokens.

Für die Authentifizierung wird somit ein optoelektronisch lesbarer Code genutzt, der nicht nur ein Sicherheits-Token mit mindestens einem Authentifizierungsfaktor beinhaltet. Vielmehr umfasst der optoelektronisch lesbare Code auch eine Information zu einer Abbildung eines berechtigten Nutzers oder Objektes, sodass durch das Lesen des optoelektronischen Codes und Anzeigen der hiermit verknüpften Abbildung diese Abbildung mit der Erscheinungsform des den Zugang suchenden Nutzers oder Objektes verglichen werden kann. Damit wird ein Faktor zur visuellen Überprüfung der Integrität des Nutzers des optoelektronischen Codes in dem optischen Code mit geliefert.

Die Nutzung optoelektronisch lesbarer Codes hat den Vorteil, dass diese mit von jedermann zugänglichen Geräten transportiert, weitergegeben und gelesen, sowie auch gedruckt transportiert werden können. Hierdurch kann ein Transport des optischen Codes sehr flexibel auch ohne technische Geräte ermöglicht werden.

Zum Lesen der verschiedenen Datensegmente wird der optische Code durch eine geeignete Apparatur gelesen und decodiert. Dabei kann entweder eine in dem optischen Code unmittelbar enthaltene Abbildung ausgelesen und in einer Bildschirmanzeige dargestellt werden. Auf diese Weise lässt sich visuell überprüfen, ob diese Darstellung mit der den optoelektronischen Code nutzenden Person oder Objektes übereinstimmt. Durch die Verschlüsselung der mit der Abbildung verknüpften Daten zusammen mit dem Sicherheits-Token in einem Nutzdatensatz wird sichergestellt, dass der optische Code nicht durch Austausch der mit der Abbildung verknüpften Daten manipuliert werden kann.

In der weiteren Sicherheitsstufe erfolgt dann das Authentifizieren des Nutzers oder Objektes durch Überprüfen des in dem optischen Code enthaltenen Sicherheits-Tokens. Hierzu kann das Sicherheits-Token beispielsweise an ein elektronisches Schloss drahtlos übertragen werden, das zum Vergleich dieses Sicherheits-Tokens mit einem in dem elektronischen Schloss hinterlegten Sicherheits-Token eingerichtet ist.

Die mit der Abbildung verknüpften Daten können beispielsweise eine Abbildung einer zu identifizierenden Person oder eines zu identifizierenden Objektes umfassen. Denkbar ist, dass die in dem optischen Code hinterlegten Daten aus einem hochauflösenden Bild generiert wurden derart, dass die in dem optischen Code hinterlegte Abbildung einen reduzierten Bildinhalt hat.

Eine Ursprungsabbildung eines berechtigten Nutzers oder Objektes wird genutzt, um hieraus zusammen mit einem Sicherheits-Token den optischen Code zu generieren.

Die mit der Abbildung verknüpften Daten können aber auch eine Speicherzugriffsadresse auf einen die Abbildung enthaltenen Abbildungsdatensatz sein, der über ein Datennetzwerk mit der Speicherzugriffsadresse abrufbar ist. Die Überprüfung der Integrität erfolgt dann durch Auslesen der Speicherzugriffsadresse aus dem optischen Code, Aufrufen der Speicherzugriffsadresse in dem Datennetzwerk (z.B. Internet), Laden des mit der Speicherzugriffsadresse verknüpften Datensatzes (Download) und Vergleichen der mit dem Abbildungsdatensatz enthaltenen Abbildung mit der Abbildung des die Authentifizierung mit dem optischen Code veranlassenden Nutzers oder Objektes.

Bei dieser Variante ist die Abbildung nicht direkt in dem optischen Code hinterlegt. Vielmehr befindet sich dort nur ein Verweis auf einen zentralen Speicherort, in dem die Abbildung zum Download bereitgestellt wird. Für die Überprüfung der Integrität wird mit Hilfe der Speicherzugriffsadresse die im zentralen Datenspeicher hinterlegte Abbildung geladen und angezeigt.

Um auch hier einen Missbrauch zu erschweren kann der optische Code eine Prüfsumme für den im Datennetzwerk unter der Speicherzugriffsadresse abgelegten Abbildungsdatensatz enthalten. Damit wird sichergestellt, dass der mit der Speicherzugriffsadresse verknüpfte Abbildungsdatensatz nicht manipuliert oder ausgetauscht werden kann. Für den Fall, dass beim Zugriff auf die Speicherzugriffsadresse eine andere Datei übertragen wird, lässt sich dies anhand der im optischen Code hinterlegten Prüfsumme für den ursprünglichen Abbildungsdatensatz als missbräuchlich feststellen.

Für den zur Integritätsprüfung vorzunehmenden Vergleichs der in dem Abbildungsdatensatz enthaltenen Abbildung mit dem Aussehen des die Authentifizierung mit dem optoelektronisch lesbaren Code veranlassenden Nutzers oder Objektes ist es denbar, diesen durch eine Person oder automatisch durzuführen.

Hierzu kann nach dem Auslesen der mit der Abbildung verknüpften Abbildungsdaten aus dem entschlüsselten Nutzdatensatz oder dem Laden des mit der Speicherzugriffsadresse verknüpften Datensatzes ein Anzeigen der in dem Abbildungsdatensatz enthaltenen Abbildung erfolgen. Die angezeigte Abbildung kann dann mit dem zu überprüfenden Nutzer bzw. Objekt visuell verglichen werden.

Denkbar ist aber auch ein automatisierter Vergleich beispielsweise mit einem Computerprogramm. Dieses kann den Vergleich z.B. mit einer trainierten künstlichen Intelligenz oder einer Ähnlichkeitsanalyse durchführen. Hierzu kann ein Aufnehmen einer Abbildung des die Authentifizierung mit dem optoelektronisch lesbaren Code veranlassenden Nutzers oder Objektes erfolgen, wobei dann ein automatisches Vergleichen der in den Abbildungsdaten bzw. dem Abbildungsdatensatz enthaltenen Abbildung mit der aufgenommenen Abbildung erfolgt. Der Grad der Übereinstimmung der aufgenommenen Abbildung mit der in den Abbildungsdaten oder dem Abbildungsdatensatz enthaltenen Abbildung ist ein Maß für die Integrität des zu überprüfenden Nutzers Objektes.

Die Authentifizierung kann mit mindestens einem im Sicherheits-Token enthaltenen Sicherheitsmerkmal erfolgen.

Denkbar ist, dass der mindestens eine Authentifizierungsfaktor biometrische Daten des berechtigten Nutzers beinhaltet, wie beispielsweise Minuzien der Finger (bzw. Papilarmuster) oder die Iris- und Retinalstruktur. Denkbar ist aber auch, dass das Sicherheits-Token als auch das mindestens eine Sicherheitsmerkmal eine persönliche Identifikationsnummer (PIN), eine Transaktionsnummer (TAN), die in der Regel mit einem Zufallsgenerator erzeugt wird, eine Passphrase oder ähnliches ist. Denkbar ist aber auch, dass das Sicherheitsmerkmal mit einem mobilen Endgerät des berechtigten Nutzers fest verknüpft ist. Hierzu kann beispielsweise als Sicherheitsmerkmal im Sicherheits-Token eine Identifikationsnummer eines berechtigten mobilen Endgerätes (IMEI), eine Identifikationsnummer (IMEI) eines berechtigten mobilen Endgerätes, eine Identifikationsnummer (IMSI) des Teilnehmer-Identitätsmoduls (SIM) eines berechtigten mobilen Endgerätes, ein integrierter SIM-Karten-Identifizierer (ICC-ID) des Teilnehmer-Identitätsmoduls (SIM) eines berechtigten mobilen Endgerätes, eine Identifizierer-Kennung eines auf dem mobilen Endgerät (4) zur Ausführung des Verfahrens zur Authentifizierung ablaufenden Computerprogramms (IdentifierForVendor) oder eine Instanzen-Kennung (Instance ID) dienen.

Wenn das Sicherheits-Token von einem berechtigten Nutzer zur Freigabe der Nutzung einer Funktion beispielsweise an ein elektronisches Schloss geschickt wird, dann muss in diesem Falle das Sicherheitsmerkmal zusätzlich eingegeben werden. Dies kann beispielsweise durch Eingabe einer persönlichen Identifikationsnummer in eine Tastatur des elektronischen Schlosses erfolgen. Dies kann auch durch einen biometrischen Sensor des elektronischen Schlosses erfolgen, der die Minuzien des Fingers des Benutzers, das Papillarmuster oder die Iris- und Retinalstruktur erfasst und mit dem in dem Sicherheits-Token enthaltenen freigegebenen biometrischen Sicherheitsmerkmal vergleicht. Denkbar ist aber auch, dass das Sicherheitsmerkmal des freigegebenen mobilen Endgerätes bei der Übertragung des Sicherheits-Tokens an eine Datenempfangseinheit, das mit der freizugebenden Funktion verknüpft ist, mit übertragen wird. Bei einer solchen Datenempfangseinheit kann es sich bspw. um ein elektronisches Schloss handeln. Damit wird sichergestellt, dass das Sicherheits-Token nur durch freigegebene mobile Endgeräte genutzt werden kann.

Denkbar ist, dass der optoelektronisch lesbare Code weiterhin Kontaktinformationen über den berechtigten Nutzer umfasst. Dies kann beispielsweise eine MeCard oder vCard mit Kontaktinformationen wie Name, Adresse, E-Mailadresse und Telefonnummer des berechtigten Nutzers umfassen. Damit kann eine weitergehende Sicherheitsüberprüfung und insbesondere eine Übermittlung von Authentifizierungsfaktoren an den berechtigten Nutzer über die in der Kontaktinformation enthaltene Kommunikationsadresse veranlasst werden. Dies ermöglicht die automatische Steuerung einer Mehr-Faktor-Authentifizierung über verschiedene Kommunikationswege, die in dem optoelektronisch lesbaren Code als Steuerelement angelegt sind.

Der Nutzdatensatz, welcher die mit der Abbildung des berechtigten Nutzers oder Objektes verknüpfte Daten und den geheimen, verschlüsselten Sicherheits-Token beinhaltet, kann zusammen mit einem Transportschlüssel verschlüsselt sein. Auf diese Weise kann der optische Code als verschlüsselter Datensatz in einer Sicherheitszentrale angefertigt und durch die Verschlüsselung mit dem Transportschlüssel abgesichert werden. Ein Auslesen und Analysieren der Nutzdaten ist dann nur für die elektronischen Geräte möglich, welche den Transportschlüssel erhalten haben und damit eine Berechtigung zugewiesen bekommen haben, die Nutzdaten des optischen Codes zumindest teilweise zu verwenden.

So kann beispielsweise ein Computerprogramm für mobile Endgeräte von Wachpersonal eingerichtet sein, um mit Hilfe des Transportschlüssels nur die mit der Abbildung verknüpften Daten auszulesen, um Zugriff zur Abbildung für die Integritätsprüfung zu erhalten.

Für einen elektronischen Schlüssel kann ein Computerprogramm für ein mobiles Endgerät eines Nutzers eingerichtet sein, um einerseits den optoelektronisch lesbaren Code zur Integritätsprüfung durch den oben genannten Wachdienst anzuzeigen und ferner das Sicherheits-Token aus dem optischen Code zu extrahieren und an einen elektronischen Schlüssel zur Authentifizierung drahtlos zu übertragen. Die drahtlose Übertragung kann beispielsweise durch Nahfeldkommunikation (NFC) erfolgen.

Die Verschlüsselung des Nutzdatensatzes in dem optischen Code und insbesondere die Verschlüsselung des Sicherheits-Tokens kann mit bekannten Verfahren der kryptographischen Verschlüsselung erfolgen. Vorteilhaft hierbei sind symmetrische oder asymmetrische Verschlüsselungsverfahren, wie beispielsweise ein Blockchiffrierungsalgorithmus, wie das AES-Verfahren (Advanced Encryption Standard).

Vorteilhaft ist es, wenn die Bildinformation des berechtigten Nutzers oder Objektes als Variable für die Verschlüsselung, Entschlüsselung und/oder als Prüfsumme genutzt wird. Diese Bildinformation kann beispielsweise kryptographischer Schlüssel für die Nutzdaten, die im optischen Code enthalten sind, verwendet werden. Denkbar ist auch eine Prüfsumme über einen die Bildinformation und Nutzdaten enthaltenden Datensatz zu bilden.

In den Nutzdaten können auch zusätzlich Zeitinformationen vorhanden sein, wie beispielsweise eine Ablaufzeit, mit der die Gültigkeit des Sicherheits-Tokens begrenzt wird.

Die Überprüfung der Integrität gelingt mit einer Vorrichtung, welche einen Bildaufnahmesensor zum optoelektronischen Lesen eines wie oben beschrieben generierten optoelektronisch lesbaren Codes und eine Datenverarbeitungseinheit aufweist, welche zum Decodieren des gelesenen optischen Codes und zur Ermittlung der im optischen Code enthaltenen codierten Informationen eingerichtet ist.

Die Funktionsfreigabeeinrichtung hat dezentrale Datenempfangseinheiten, die nach einer positiven Authentifizierung angesteuert werden. Auf diese Weise kann beispielsweise im Falle einer Zutrittskontrolleinrichtung mit dezentralen Schließeinheiten eine Tür durch Öffnen der dezentralen Schließeinheit freigegeben werden, um der zu authentifizierenden Person den Zugang zu mit der Tür verschlossenen Räumen (Gebäuderäume, Gebäudebereiche, Geländebereiche, Schränke etc.) zu ermöglichen.

Die Erfindung wird nachfolgend anhand eines Ausführungsbeispiels mit den beigefügten Zeichnungen näher erläutert. Es zeigen:
- Figur 1 -: schematische Darstellung einer Funktionsfreigabeeinrichtung für das Verfahren zur Authentifikation mit optoelektronisch lesbaren Codes;
- Figur 2 -: Flussdiagramm des Verfahrens zum Authentifizieren mit einem optoelektronisch lesbaren Code.

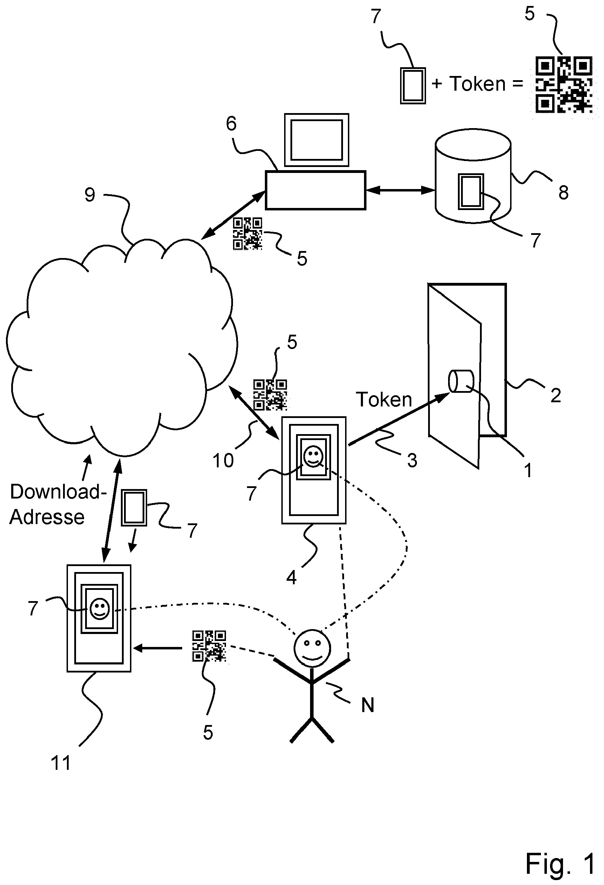

Figur 1 zeigt eine schematische Darstellung einer Funktionsfreigabeeinrichtung in Form einer Zutrittskontrolleinrichtung, die eine dezentrale Datenempfangseinheit 1 mit einem elektronischen Schloss an einer Tür 2 hat. Hierbei kann es sich um eine Tür 2 für einen Raum in einem Gebäude handeln. Es kann aber auch eine Tür 2 eines Schließfaches oder eines sonstigen abgesicherten räumlichen Bereiches sein. Die dezentrale Datenempfangseinheit 1 kann aber auch eine elektronische Nutzungsfreigabeeinheit zur Nutzungsfreigabe von anderen Funktionen, wie beispielsweise für elektronische Geräte oder elektromechanische Geräte und dergleichen sein.

Zur Nutzungsfreigabe von Funktionen wird über einen drahtlosen Kommunikationskanal 3 von einem mobilen oder stationären Endgerät 4 eines berechtigten Nutzers N ein mit einem geheimen Freigabeschlüssel verschlüsselter Datensatz an die dezentrale Datenempfangseinheit 1 geschickt. Dieser Datensatz enthält ein Sicherheits-Token (Sicherheitsmerkmal). Die dezentrale Datenempfangseinheit 1 ist beispielsweise mittels einer geeignet programmierbaren Recheneinheit eingerichtet, um das Sicherheits-Token mit einem Freigabekriterium zu überprüfen und in Abhängigkeit des Erfolgs dieser Überprüfung den Zutritt freizugeben.

Der geheime Freigabeschlüssel kann beispielsweise ein Schlüssel zur kryptographischen Verschlüsselung des Datensatzes sein, der nur der dezentralen Datenempfangseinheit 1 und einer zentralen Datenverarbeitungseinheit 6 bekannt ist, welche die Verschlüsselung des Sicherheits-Token vornimmt. Jede dezentrale Datenempfangseinheit 1 kann einen individuellen Freigabeschlüssel haben. Denkbar ist aber auch, dass ein Freigabeschlüssel eineindeutig an eine Funktion geknüpft ist, welche an mindestens eine dezentrale Datenempfangseinheit 1 gekoppelt ist.

Für die Übertragung des Sicherheits-Tokens nutzt das Endgerät 4 einen optoelektronisch lesbaren Code 5. Dieser wurde in einer zentralen Datenverarbeitungseinheit 6 aus einer dort hinterlegten Abbildung 7 eines berechtigten Nutzers N oder Objektes sowie dem dort sicher hinterlegten Sicherheits-Token erzeugt. Hierzu werden mit der Abbildung des berechtigten Nutzers N oder Objektes verknüpfte Daten zusammen mit dem Sicherheits-Token zu einem Nutzdatensatz kombiniert. Das Sicherheits-Token ist hierbei mit einem geheimen Freigabeschlüssel verschlüsselt und wird zusammen mit den mit der Abbildung 7 verknüpften Abbildungsdaten weiterhin mit einem Transportschlüssel verschlüsselt und als optoelektronisch lesbarer Code 5 in eine visuell erfassbare Form gebracht.

Die zentrale Datenverarbeitungseinheit 6 hat hierbei einen Zugriff auf einen Datenspeicher 8, in dem mindestens die Abbildung 7 und gegebenenfalls auch Sicherheits-Token sowie gegebenenfalls weitere Nutzerinformationen abgelegt sind.

Der optoelektronische Code 5 wird dann in elektronischer Weise über ein Datennetzwerk 9 und gegebenenfalls einen Datenfunkkanal 10 an das Endgerät 4 übertragen. Denkbar ist aber auch, dass der optoelektronische Code 5 von der zentralen Datenverarbeitungseinheit 6 oder einen dezentralen Computerarbeitsplatz ausgedruckt und in nicht-elektronischer Form zur weiteren Nutzung an den mindestens einen berechtigten Nutzer ausgegeben wird.

Mit einem Endgerät 4, das ein geeignet eingerichtetes Computerprogramm und eine Kamera oder einen Scanner hat, kann der optoelektronische Code 5 gelesen und decodiert werden.

Für die Authentifizierung des Nutzers N in der dezentralen Datenempfangseinheit 1 können zusätzlich ein oder mehrere Sicherheitsmerkmale genutzt werden. So kann beispielsweise die Eingabe einer persönlichen Identifikationsnummer PIN durch den Nutzer abgefragt werden, wobei die über ein Tastaturfeld eingegebene und an die dezentrale Datenempfangseinheit 1 übertragene persönliche Identifikationsnummer mit einem in dem Sicherheits-Token enthaltenen entsprechenden Sicherheitsmerkmal verglichen wird. Zur Authentifizierung kann auch optional eine individuelle Kennung des dann bevorzugt mobilen Endgerätes 4 zusammen mit dem Sicherheits-Token von dem Endgerät 4 an die dezentrale Datenempfangseinheit 1 übertragen werden, um zu überprüfen, ob die individuelle Kennung des Endgerätes 4 mit dem in dem Sicherheits-Token verschlüsselten entsprechenden Sicherheitsmerkmal übereinstimmt.

Das Sicherheits-Token kann mit einem kryptographischen Schlüssel verschlüsselt werden, der bspw. aus einer Kombination des geheimen Freigabeschlüssels, der für eine dezentrale Datenempfangseinheit 1 individualisiert ist, und einem individuellem Sicherheitsmerkmal eines Nutzers N oder seines Endgerätes 4 gebildet ist. Das individuelle Sicherheitsmerkmal wird von Nutzer N mit der zentralen Datenverarbeitungseinheit 6 vereinbart und später für die Freigabe auf einem anderen Transportweg als der optoelektronisch lesbare Code 5 an die ausgewählte Datenempfangseinheit 1 übermittelt. Dort kann der kryptographische Schlüssel zur Entschlüsselung des im optoelektronisch lesbaren Code 5 enthaltene Sicherheits-Token aus der Kombination des geheimen Freigabeschlüssels und des erhaltenen individuellen Sicherheitsmerkmals gebildet und genutzt werden.

Wenn in dem optoelektronischen Code 5 direkt die Daten zu einer Abbildung des berechtigten Nutzers N oder Objektes enthalten sind, können diese von dem Endgerät 4 auf dem Bildschirm angezeigt werden. Damit gelingt eine Prüfung der Integrität des Nutzers N des optoelektronisch lesbaren Codes 5 durch Vergleich dieser Abbildung mit der Erscheinungsform der den optoelektronisch lesbaren Code 5 nutzenden Person oder dem hiermit in Verbindung stehenden Objektes. Dies soll durch den mittels einer Strichpunktlinie angedeuten Bezuges der auf dem Display des Endgerätes 4 dargestellten Abbildung 7 mit dem Gesicht des Nutzers N verdeutlicht werden.

Denkbar ist aber auch, dass in dem optoelektronisch lesbaren Code 5 eine Speicherzugriffsadresse enthalten ist. Mit Hilfe dieser Speicherzugriffsadresse kann dann über das Datennetzwerk 9 auf den Datenspeicher 8 der zentralen Datenverarbeitungseinheit 6 zugegriffen werden, um die unter der Speicherzugriffsadresse hinterlegte Abbildung 7 in das Endgerät 4 zu übertragen und dort anzuzeigen.

Das mobile Endgerät 4 extrahiert aus dem optoelektronisch lesbaren Code 5 weiterhin das Sicherheits-Token, welches immer noch verschlüsselt bleibt und in dieser verschlüsselten Form drahtlos an die dezentrale Datenempfangseinheit 1 übertragen wird. In der dezentralen Datenempfangseinheit 1 wird dann durch beispielsweise ein geeignetes Computerprogramm das Sicherheits-Token entschlüsselt und zur Authentifizierung genutzt. Hierzu wird im einfachsten Fall bei Übereinstimmung des Sicherheits-Tokens mit einem in der dezentralen Datenempfangseinheit 1 hinterlegten Sicherheitsmerkmal der Zugang freigegeben.

Denkbar ist aber auch, dass zusätzlich eine Mehr-Faktor-Authentifizierung vorgenommen wird, um zur Authentifizierung weitere Sicherheitsmerkmale zu überprüfen. Diese können in dem Sicherheits-Token hinterlegt und verschlüsselt an die dezentrale Schließeinheit 1 übertragen und auf einem anderen Weg beispielsweise durch Tastatureingabe oder biometrische Sensoren erfolgen.

Für die Überprüfung der Integrität des Nutzers N des optoelektronisch lesbaren Codes 5 kann von einem weiteren mobilen oder stationären Endgerät 11 beispielsweise eines Wachpersonals der optoelektronisch lesbare Code 5 eingelesen werden. Mit Hilfe der in dem optoelektronisch lesbaren Code 5 enthaltenen Daten, die mit der Abbildung 7 verknüpft sind, wird diese Abbildung 7 im weiteren Endgerät 11 beispielsweise der Wachperson angezeigt. Auf diese Weise kann die Wachperson mit diesem weiteren Endgerät 11 überprüfen, ob der Nutzer N oder das Objekt, welches sich mit dem optoelektronisch lesbaren Code 5 ausweist, mit dem in der Abbildung 7 dargestellten Nutzer N oder Objekt übereinstimmt. Dies ist wiederum durch eine Strichpunktlinie angedeutet, die auf den Bezug der auf dem Display des weiteren (Wächter-)Endgerätes 11 dargestellten Abbildung 7 mit dem Gesicht des Nutzers N verdeutlicht.

Der Bezug des Nutzers N zu dem von ihm genutzten optoelektronischen Code 5 ist durch jeweils eine gestrichelte Linie angedeutet. Der Nutzer N kann hierzu beispielsweise einen ausgedruckten optischen Code 5 mit sich führen. Denkbar ist auch, dass dieser optoelektronische Code 5 in Datenform in einem dem Nutzer N dauerhaft oder temporär zugeordneten Endgerät 4 abgespeichert wird und z.B. auf dem Display des Endgerätes 4 zum Einlesen beispielsweise durch das weitere Endgerät 11 angezeigt werden kann.

Auch hier kann das weitere Endgerät 11 durch geeignete Programmierung eingerichtet sein, um die Abbildung 7 unmittelbar aus den Nutzdaten des optoelektronischen Codes 5 zu extrahieren. Denkbar ist aber auch, dass eine Speicherzugriffsadresse von dem weiteren Endgerät 11 über das Datennetzwerk 9 aufgerufen wird, um die Abbildung 7 aus dem Datenspeicher 8 in der Cloud herunterzuladen.

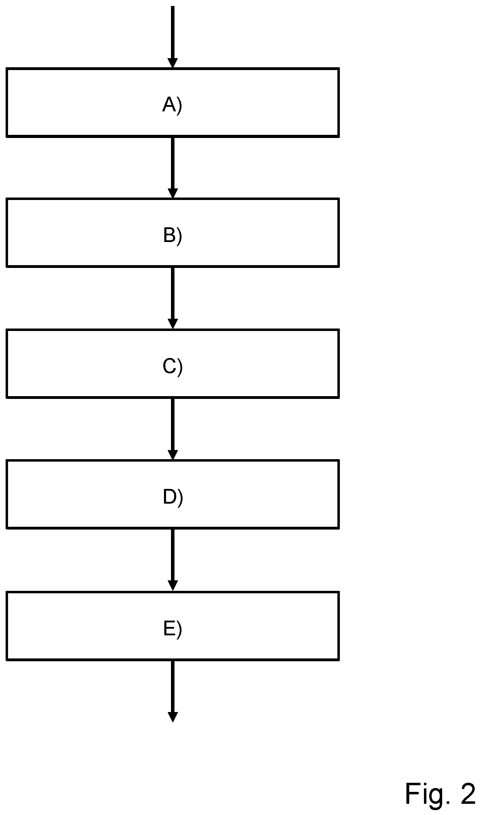

Figur 2 zeigt ein Flussdiagramm für die von einem Computerprogramm ausgeführten Schritte des Verfahrens zur Authentifizierung mit einem optoelektronisch lesbaren Code. Dieses Computerprogramm hat Programmcodemittel zur Durchführung der Schritte A) bis E), wenn das Computerprogramm auf einem Prozessor eines der Endgeräte 4, 11 ausgeführt wird.

Das Endgerät 4, 11 hat eine Bilderfassungseinheit mit einer Logik zum Einlesen und Analysieren eines optoelektronisch lesbaren Codes 5.

Im Schritt A) erfolgt ein optoelektronisches Lesen des optoelektronisch lesbaren Codes 5, der mit einer Abbildung eines berechtigten Nutzers N oder Objektes verknüpfte Abbildungsdaten und einem geheimen, verschlüsselten Sicherheits-Token beinhaltet. Die mit der Abbildung verknüpften Abbildungsdaten bilden zusammen mit dem Sicherheits-Token einen kombinierten verschlüsselten Nutzdatensatz in dem optoelektronisch lesbaren Code 5.

Im Schritt B) erfolgt ein Entschlüsseln des in dem optoelektronisch lesbaren Code 5 enthaltenen Nutzdatensatzes. Dies kann beispielsweise durch eine symmetrische oder asymmetrische Entschlüsselung mit einem Transportdatenschlüssel erfolgen. Daten, die in dem optoelektronisch lesbaren Code 5 enthalten sind, können für eine AES-Entschlüsselung genutzt werden.

Im Schritt C) erfolgt ein Auslesen der mit der Abbildung verknüpften Daten aus dem entschlüsselten Nutzdatensatz des optoelektronisch lesbaren Codes 5. Hierbei kann es sich direkt um eine Abbildung enthaltene Abbildungsdaten oder beispielsweise um eine Speicherzugriffsadresse für den Zugriff auf eine mit dieser Speicherzugriffsadresse verknüpften Abbildungsdatei in einem zentralen Datenspeicher 8 (Cloud) handeln. Auch die Speicherzugriffsadresse wird als Abbildungsdaten im Sinne der Erfindung verstanden.

Im Schritt D) erfolgt dann ein Anzeigen der mit den ausgelesenen Abbildungsdaten verknüpften Abbildung zur Überprüfung der Integrität des Nutzers N des optoelektronisch lesbaren Codes 5 durch Vergleichen der angezeigten Abbildung mit dem entsprechenden Aussehen des die Authentifizierung mit dem optoelektronisch lesbaren Code veranlassenden Nutzers N oder Objektes.

Im Schritt E) erfolgt ein drahtloses Übertragen des in dem optoelektronisch lesbaren Code 5 enthaltenen Sicherheits-Tokens zum Authentifizieren des Nutzers N oder Objektes durch Überprüfen von Sicherheitsmerkmalen mit in dem Sicherheits-Token enthaltenen Sicherheitsmerkmalen. Der Sicherheits-Token kann beispielsweise drahtlos an eine digitale Datenempfangseinheit übertragen werden.

In der digitalen Datenempfangseinheit wird der verschlüsselte Sicherheits-Token mit dem dort sicher abgelegten Tokenschlüssel entschlüsselt und die in dem Sicherheits-Token enthaltene Information zur Authentifizierung genutzt.

Das drahtlose Übertragen des Sicherheits-Tokens kann mittels Nahfeldkommunikation (NFC) erfolgen. Denkbar ist eine Datenübertragung nach dem BLE-Standard, WLAN-Standard und dergleichen.

Bei der Authentifizierung im Schritt E) können weitere Authentifizierungsfaktoren berücksichtigt werden, die in dem Sicherheits-Token hinterlegt sind. Dies kann beispielsweise ein Zeitstempel sein, der die Gültigkeit des optoelektronisch lesbaren Codes 5 und damit die Authentifizierungsfreigabe für einen bestimmten vorgegebenen Zeitraum beschränkt.

Die in Figur 2 dargestellten Schritte können nicht nur in einem Endgerät 4 eines Nutzers N ausgeführt werden. Denkbar ist auch, dass an einer mit einer digitalen Datenempfangseinheit 1 mit elektronische Schloss versehenen Tür eine Leseeinheit für optoelektronisch lesbare Codes 5 mit einer daran angeschlossenen Recheneinheit angeordnet ist, die drahtgebunden oder drahtlos mit dem elektronischen Schloss der dezentralen Datenempfangseinheit) verbunden und mittels geeigneter Programmierung zur Durchführung der Schritte A) bis E) ausgebildet ist. Ein den Zutritt begehrender Nutzer benötigt dann nur den ausgedruckten optoelektronisch lesbaren Code. Dieser ist zuverlässig, einfach und preiswert herstellbar und an den berechtigten Nutzer, wie beispielsweise einem Hotelgast, auszuhändigen. Durch die Verknüpfung des optoelektronisch lesbaren Codes mit der Abbildung des berechtigten Nutzers N wird über die Authentifizierungsmöglichkeit hinaus eine Integritätsprüfung möglich.

## Patentansprüche

1. Verfahren zum Authentifizieren mit einem optoelektronisch lesbaren Code (5), **dadurch gekennzeichnet,**
- **dass** der optoelektronisch lesbare Code (5) mit einer Abbildung (7) eines berechtigten Nutzers (N) oder Objektes verknüpfte Abbildungsdaten und einen geheimen, verschlüsselten Sicherheits-Token beinhaltet, wobei die mit der Abbildung (7) verknüpften Abbildungsdaten zusammen mit dem Sicherheits-Token einen kombinierten verschlüsselten Nutzdatensatz in dem optoelektronisch lesbaren Code (5) bilden,
- **dass** ein Überprüfen der Integrität des Nutzers (N) des optoelektronisch lesbaren Codes (5) durch Entschlüsseln des in dem optoelektronisch lesbaren Code (5) enthaltenen Nutzdatensatzes, Auslesen der mit der Abbildung (7) verknüpften Abbildungsdaten aus dem entschlüsselten Nutzdatensatz und Vergleichen der mit den ausgelesenen Abbildungsdaten verknüpften Abbildung (7) mit dem entsprechenden Aussehen des die Authentifizierung mit dem optoelektronisch lesbaren Code (5) veranlassenden Nutzers (N) oder Objektes erfolgt,
- und **dass** ein Authentifizieren des Nutzers (N) oder Objektes durch Überprüfen des in dem optoelektronisch lesbaren Code (5) enthaltenen Sicherheits-Tokens erfolgt.

2. Verfahren nach Anspruch 1, **dadurch gekennzeichnet, dass** die mit der Abbildung (7) verknüpften Abbildungsdaten eine Abbildung (7) einer zu identifizierenden Person oder eines zu identifizierenden Objektes umfassen.

3. Verfahren nach Anspruch 1 oder 2, **dadurch gekennzeichnet, dass** die mit der Abbildung (7) verknüpften Abbildungsdaten eine Speicherzugriffsadresse auf einen die Abbildung (7) enthaltenen Abbildungsdatensatz, der über ein Datennetzwerk (9) mit der Speicherzugriffsadresse abrufbar ist, beinhalten, wobei die Überprüfung der Integrität durch Auslesen der Speicherzugriffsadresse aus dem optoelektronisch lesbaren Code (5), Aufrufen der Speicherzugriffsadresse in dem Datennetzwerk (9), Laden des mit der Speicherzugriffsadresse verknüpften Datensatzes und Vergleichen der in dem Abbildungsdatensatz enthaltenen Abbildung (7) mit dem Aussehen des die Authentifizierung mit dem optoelektronisch lesbaren Code (5) veranlassenden Nutzers (N) oder Objektes erfolgt.

4. Verfahren nach Anspruch 3, **dadurch gekennzeichnet, dass** der optoelektronisch lesbare Code (5) eine Prüfsumme für den im Datennetzwerk (9) unter der Speicherzugriffsadresse abgelegten Abbildungsdatensatz enthält.

5. Verfahren nach einem der Ansprüche 1 bis 4, **dadurch gekennzeichnet, dass** nach dem Auslesen der mit der Abbildung (7) verknüpften Abbildungsdaten aus dem entschlüsselten Nutzdatensatz oder dem Laden des mit der Speicherzugriffsadresse verknüpften Datensatzes ein Anzeigen der in dem Abbildungsdatensatz enthaltenen Abbildung (7) erfolgt.

6. Verfahren nach einem der Ansprüche 1 bis 4, gekenzeichnet durch Aufnehmen einer Abbildung des die Authentifizierung mit dem optoelektronisch lesbaren Code (5) veranlassenden Nutzers (N) oder Objektes und automatisches Vergleichen der in den Abbildungsdaten bzw, dem Abbildungsdatensatz enthaltenen Abbildung (7) mit der aufgenommenen Abbildung.

7. Verfahren nach einem der vorhergehenden Ansprüche, **dadurch gekennzeichnet, dass** die Authentifizierung mit mindestens einem im Sicherheits-Token enthaltenen Sicherheitsmerkmal erfolgt.

8. Verfahren nach Anspruch 7, **dadurch gekennzeichnet dass** der mindestens eine Authentifizierungsfaktor aus der Gruppe ausgewählt ist von biometrischen Daten des berechtigten Nutzers (N), insbesondere ausgewählt aus Minuzien der Finger oder die Iris- und Retinastruktur, einer persönlichen Identifikationsnummer (PIN), einer Transaktionsnummer (TAN), einer Passphrase, einer Identifikationsnummer (IMEI) eines berechtigten Endgerätes (4), einer Identifikationsnummer (IMSI) des Teilnehmer-Identitätsmoduls (SIM) eines berechtigten Endgerätes (4), eines integrierten SIM-Karten-Identifizierers (ICC-ID) des Teilnehmer-Identitätsmoduls (SIM) eines berechtigten Endgerätes (4), einer Identifizierer-Kennung eines auf dem Endgerät (4) zur Ausführung des Verfahrens zur Authentifizierung nach einem der vorhergehenden Ansprüche ablaufenden Computerprogramms (IdentifierForVendor) oder einer Instanzen-Kennung (Instance ID).

9. Verfahren nach einem der vorhergehenden Ansprüche, **dadurch gekennzeichnet, dass** der optoelektronisch lesbare Code (5) weiterhin Kontaktinformationen über den berechtigten Nutzer (N) umfasst.

10. Verfahren nach einem der vorhergehenden Ansprüche, **dadurch gekennzeichnet, dass** der Nutzdatensatz, welcher die mit der Abbildung (7) des berechtigten Nutzers (N) oder Objektes verknüpfte Abbildungsdaten und den geheimen, verschlüsselten Sicherheits-Token beinhaltet, zusammen mit einem Transportschlüssel verschlüsselt sind.

11. Funktionsfreigabeeinrichtung mit einer zentralen Datenverarbeitungseinheit (6), einem Computerprogramm zur Ausführung auf einem Endgerät (4, 11) und mit dezentralen Datenempfangseinheiten (1), wobei die dezentralen Datenempfangseinheiten (1) zur Freigabe einer Funktion nach erfolgreicher Authentifizierung eines Nutzers oder Objektes durch Überprüfen eines in einem optoelektronisch lesbaren Code (5) enthaltenen Sicherheits-Tokens eingerichtet sind, **dadurch gekennzeichnet, dass** die Funktionsfreigabeeinrichtung zur Durchführung des Verfahrens nach einem der vorhergehenden Ansprüche 1 bis 10 ausgebildet ist.

12. Computerproramm mit Programmcodemitteln zur Durchführung der Schritte des Verfahrens nach einem der Ansprüche 1 bis 10:
A) optoelektronisches Lesen eines optoelektronisch lesbaren Codes (5), der mit einer Abbildung (7) eines berechtigten Nutzers (N) oder Objektes verknüpfte Abbildungsdaten und einen geheimen, verschlüsselten Sicherheits-Token beinhaltet, wobei die mit der Abbildung (7) verknüpften Abbildungsdaten zusammen mit dem Sicherheits-Token einen kombinierten verschlüsselten Nutzdatensatz in dem optoelektronisch lesbaren Code (5) bilden;
B) Entschlüsseln des in dem optoelektronisch lesbaren Code (5) enthaltenen Nutzdatensatzes,
C) Auslesen der mit der Abbildung (7) verknüpften Abbildungsdaten aus dem entschlüsselten Nutzdatensatz, und
D) Anzeigen der mit den ausgelesenen Abbildungsdaten verknüpften Abbildung (7) zur optischen Überprüfung der Integrität des Nutzers (N) des optoelektronisch lesbaren Codes (5) durch Vergleichen der angezeigten Abbildung (7) mit dem entsprechenden Aussehen des die Authentifizierung mit dem optoelektronisch lesbaren Code (5) veranlassenden Nutzers oder Objektes,
eingerichtet sind, wenn das Computerprogramm aus einem Prozessor eines Endgerätes (4, 11) ausgeführt wird.

13. Computerprogramm nach Anspruch 12, **dadurch gekennzeichnet, dass** die Programmcodemittel zum
E) drahtlosen Übertragen des in dem optoelektronisch lesbaren Code (5) enthaltenen Sicherheits-Tokens zum Authentifizieren des Nutzers (N) oder Objektes durch Überprüfen von Authentifizierungsfaktoren mit in dem Sicherheits-Token enthaltenen Authentifizierungsfaktoren eingerichtet sind.
